## Europäisches Patentamt
## European Patent Office
## Office européen des brevets

(19)

(11) Veröffentlichungsnummer: **0 119 292**
**B1**

(12) ## EUROPÄISCHE PATENTSCHRIFT

(45) Veröffentlichungstag der Patentschrift:
**03.09.86**

(51) Int. Cl.⁴: **A 01 C 7/10, A 01 C 15/00**

(21) Anmeldenummer: **83105055.4**

(22) Anmeldetag: **21.05.83**

(54) Verfahren zur Regelung der Ausbringung von Kultiviergut auf eine landwirtschaftliche Nutzfläche.

(30) Priorität: **12.04.83 DE 3312997**

(43) Veröffentlichungstag der Anmeldung:
**26.09.84 Patentblatt 84/39**

(45) Bekanntmachung des Hinweises auf die Patenterteilung:
**03.09.86 Patentblatt 86/36**

(84) Benannte Vertragsstaaten:
**AT BE CH DE FR GB IT LI LU NL SE**

(56) Entgegenhaltungen:
**DE-A-2 504 725**
**GB-A-609 989**
**US-A-2 119 059**
**US-A-3 679 098**
**US-A-3 912 121**
**US-A-4 232 255**

(73) Patentinhaber: **Kirchberger, Franz, Lichtenfelser Strasse 43, D-8623 Staffelstein (DE)**

(72) Erfinder: **Kirchberger, Franz, Lichtenfelser Strasse 43, D-8623 Staffelstein (DE)**

(74) Vertreter: **LOUIS, PÖHLAU, LOHRENTZ & SEGETH, Kesslerplatz 1 P.B. 3055, D-8500 Nürnberg (DE)**

EP 0 119 292 B1

## Beschreibung

Die Erfindung betrifft ein Verfahren zur Regelung der pro Flächeneinheit auf eine landwirtschaftliche Nutzfläche aus einem über die landwirtschaftliche Nutzfläche verfahrbaren Vorratsbehälter mit Hilfe einer Arbeitsdosiervorrichtung ausgebrachten Menge an Kultiviergut, wobei ein Teil des Kultivigutes aus dem Vorratsbehälter mit Hilfe einer Kontrolldosiereinheit in einen mitgeführten Meßbecher gefüllt wird, wobei die Arbeitsdosiervorrichtung und die Kontrolldosiereinheit von einer gemeinsamen Dosierwelle angetrieben werden, die über eine einstellbare Übersetzungseinrichtung mit den Rädern des Vorratsbehälters verbunden ist, und das Verhältnis zwischen der Umdrehungsgeschwindigkeit der Dosierwelle und der Fahrgeschwindigkeit derart geändert wird, daß die Fahrstrecke, innerhalb der der Meßbecher mit der fest vorgegebenen Füllmenge gefüllt wird, gleich bleibt.

Das Verfahren dieser Art ist aus der nicht vorveröffentlichen EP-A-93 986 bekannt. Nach dieser Patentanmeldung wird die Fahrstrecke, innerhalb der der Meßbecher gefüllt wird, mit Hilfe einer Meßvorrichtung an den Laufrädern erfaßt. Diese Fahrstrecke muß mit der Fahrstrecke verglichen werden, innerhalb der der Meßbecher mit der fest vorgegebenen Füllmenge gefüllt hätte werden müssen. Ausgehend von der Differenz zwischen dem Ist-Wert und dem Soll-Wert wird dann durch Änderung des Übersetzungsverhältnisses die Umdrehungsgeschwindigkeit der Dosierwelle und damit die Dosierleistung der Arbeitsdosiervorrichtung nach gestellt. Es handelt sich bei diesem Verfahren - wie auch bei allen anderen noch bekannten Verfahren - also um eine echte Regelung in einem geschlossenen Regelkreis.

Der Erfindung liegt nun die Aufgabe zugrunde, das Verfahren zur Regelung der pro Flächeneinheit auf eine landwirtschaftliche Nutzfläche ausgebrachten Menge an Kultiviergut zu vereinfachen.

Diese Aufgabe wird erfindungsgemäß bei dem eingangs als bekannt vorausgesetzten Verfahren dadurch gelöst, daß die Übersetzung der Übersetzungseinrichtung in Abhängigkeit von der Anzahl der Umdrehungen der Dosierwelle eingestellt wird, die erforderlich ist, um den Meßbecher zu füllen.

Die Erfindung macht sich also zunutze, daß bei Zunahme der für die Füllung eines Meßbechers erforderlichen Dosierarbeit (Anzahl der Umdrehungen der Dosierwelle) - beispielsweise wenn körniges Kultiviergut wie Samen oder pulverförmiges Kultiviergut wie Düngemittel schwerer aus dem Vorratsbehälter strömen - die Dosierleistung (Arbeit pro Zeit bzw. Arbeit pro zurückgelegte Wegstrecke) ebenfalls erhöht werden muß, damit die Fahrstrecke, innerhalb der der Meßbecher mit der fest vorgegebenen Füllmenge gefüllt und somit die vorgegebene Menge an Kultiviergut abgegeben wird, gleichbleibt. Nach der Erfindung wird also gerade keine Regelung in einem geschlossenen Regelkreis und ein Ist-Soll-Wertvergleich durchgeführt. Daher kann die Steuerelektronik zur Durchführung des erfindungsgemäßen Verfahrens wesentlich einfacher aufgebaut sein.

Ferner wird zweckmäßigerweise die fest vorgegebene Füllmenge des Meßbechers in Abhängigkeit von der pro Flächeneinheit auf die landwirtschaftliche Nutzfläche auszubringenden Menge an Kultiviergut und in Abhängigkeit des spezifischen Volumens des Kultivigutes verändert, so daß direkt ohne weiteren Rechengang von der Dosierarbeit die Übersetzung der Übersetzungseinrichtung eingestellt werden kann.

Die Erfindung wird nun an Hand dieses Ausführungsbeispiels und der beiliegenden Zeichnung näher erläutert. Es zeigen:

Fig. 1 eine Seitenansicht eines mobilen, landwirtschaftlichen Gerätes;

Fig. 2 eine Vorderansicht eines Teiles eines mobilen, landwirtschaftlichen Gerätes und

Fig. 3 die entsprechenden Blockschaltungen eines mobilen, landwirtschaftlichen Gerätes.

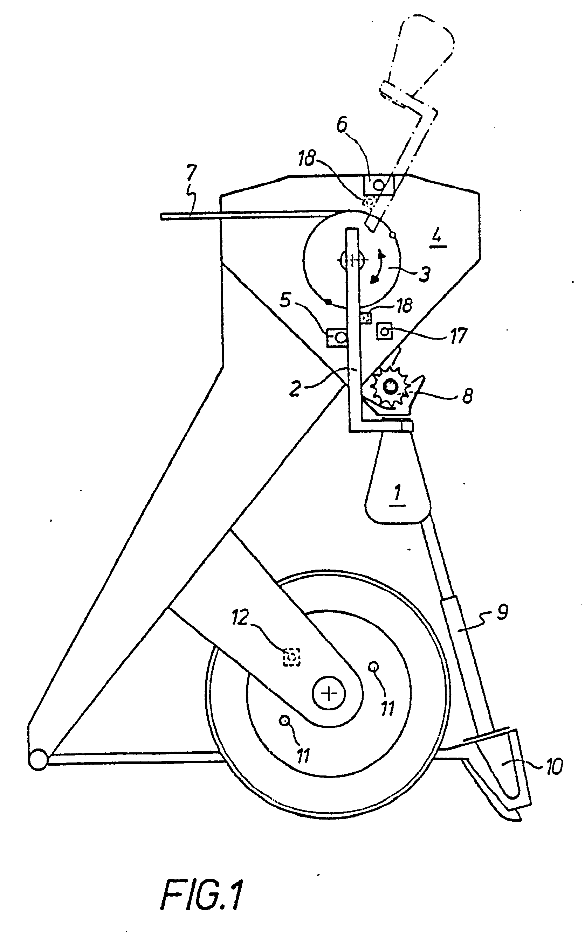

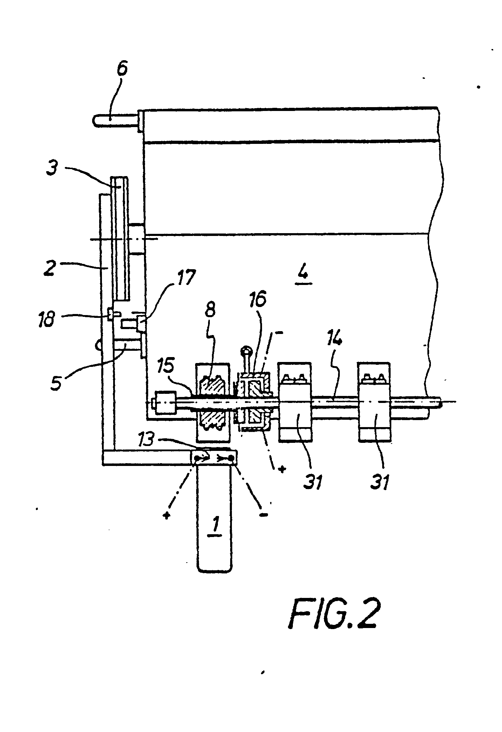

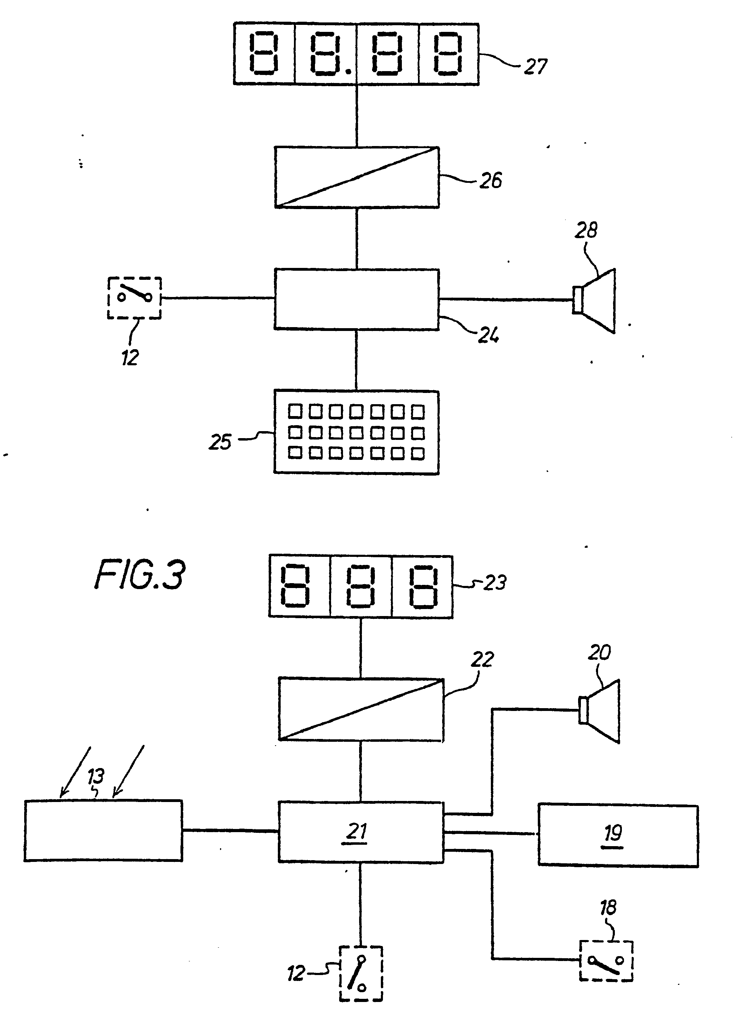

Nach der EP-A-93986 ist, wie aus den Fig. 1 und 2 hervorgeht, neben den üblichen Arbeitsdosierrädern 31 ein Kontrolldosierrad 8 vorgesehen, mittels welchem ein Messbecher 1 bis zu einer durch Pfeile angedeuteten Lichtschranke 13, die als Wirkungsgrenze funktioniert, während der Arbeit im Feld gefüllt wird. Wenn die Füllgutoberfläche den Lichtweg der Lichtschranke 13 erreicht und den Lichtstrahl unterbricht, wird ein in Fig.3 dargestellter Steuerregisterzähler 21 durch die dort dargestellte Lichtschranke 13 gestoppt, der die während des Zeitintervalles, das zur Füllung des Messbechers 1 notwendig ist, zurückgelegte Wegstrecke an Hand der Impulse aus dem Reedschalter 12 in Verbindung mit den Magneten 11 am Laufrad zählt. Mit der Unterbrechung der Lichtschranke 13 wird gleichzeitig der in Fig. 3 durch den Block 19 angedeutete Haltestrom für die Kupplung 16 -Fig.2- unterbrochen, wodurch die Hohlwelle 15 mit dem Kontrolldosierrad 8 stehen bleibt. Nur die Dosierradwelle 14 mit den parallel laufenden Arbeitsdosierrädern 31 dreht sich weiter, so dass den Scharen 10 durch die Saatrohre 9 Kultiviergut zufliesst. Über den Decoder und den Treiber 22 zeigt das Display 23 die im Zeitintervall der Füllung des Messbechers 1 gesäte Fläche an. Erreicht der Zähler 21 -Fig.3- eine über die Tastatur 25 eingegebene Flächengrenzzahl, so wird der Signalgeber 20 ausgelöst, der dem Anwender ein Warnsignal gibt. Der Anwender kann dann diese Kontrollmenge an Kultiviergut im Messbecher 1 auf die Arbeitsmenge, die im gleichen Zeit- und Wegintervall auf die landwirtschaftliche Nutzfläche ausgebracht worden ist, und diese letztere Menge auf die im Display 23 angezeigte Fläche umrechnen. Diese Hochrechnung ist zulässig, weil der Kontrolldosierauslauf zur gesamten Dosierleistung in einem bekannten Verhältnis steht, das bei Kontroll-Dosierwerkzeugen, die parallel zu einer bestimmten Anzahl gleichartiger Arbeitswerkzeuge geschaltet sind, entsprechend dieser Anzahl festliegt, und bei Kontrollausgängen, die sich im Querschnitt vom Arbeitsausgang unterscheiden, in einer Abdrehprobe vor der Arbeit ermittelt werden kann. Der Quotient aus Arbeitsmenge zu Fläche kann mit dem Soll-Wert verglichen und eine etwaige Differenz in einer entsprechenden Korrektur der Dosiereinstellung ausgeglichen werden. Die einzelnen Umrechnungen können dabei mit entsprechenden Rechenschiebern durchgeführt werden. Dies gilt auch für die Einstellungskorrekturen, wenn die Skala des Einstellungsmechanismus auf eine logarithmische Wirkungskurve abgebildet wird.

Bezogen auf den Gesamtinhalt des Vorratsbehälters 4 für das Kultiviergut kann nach der ersten Kontrollmessung auch die Gesamtfläche, die bei der jeweiligen Dosiereinstellung bearbeitet werden kann, errechnet und eine Markierung in einem zweiten, durchgehend laufenden Flächenzähler 24 gesetzt werden. Wenn sein Zählerstand bei dieser Markierung bzw. bei einem gewählten Abstand davor ankommt, erteilt das Register 24 den Auslösebefehl für das Warnsignal des Signalgebers 28. Es informiert den Anwender über das bevorstehende Leerlaufen des Vorratsbehälters 4 des mobilen landwirtschaftlichen Gerätes.

Auf einer Kurvenbahn wird der vollgefüllte Messbecher 1 fernbetätigt mit dem Bowdenzug 7 vom Traktorfahrerstand aus von der Messposition in die Entleerungsposition geschwenkt. Bei dieser Drehung um die Schwenkscheibe 3 passiert die Halterung 2 mit dem Reedschalter 18 den Magneten 17 und schlägt am oberen Anschlag 6 an. Nach dem Entleeren und dem Zurückschwenken in die durch den unteren Anschlag 5 gegebene Messposition passiert die Halterung 2 mit dem Reedschalter 18 den Magneten 17 ein zweites Mal. Bei dieser zweiten Passage wird die Ausgabe des Zählers 21 -Fig.3- wieder auf Null gestellt und sein Zählwerk sowie der Treiber 19 und die Kupplung 16 mittels des Haltestromes aus Block 19 wieder in Betrieb gesetzt, derart, dass sich das Kontrolldosierrad 8 mit den Arbeitsdosierrädern 31 wieder mitdreht. Gleichzeitig verarbeitet der Zähler 24 die Impulse des Reedschalters 12 durchgehend weiter und zeigt über den Decoder 26 auf dem Display 27 die zurückgelegte Gesamtfläche an. Wie bereits erwähnt worden ist, kann nach der ersten Füllung des Messbechers 1 mit Rechenscheiben oder -schiebern die Flächengrenze hochgerechnet werden, welche mit einer Füllung des Vorratsbehälters 4 erreicht werden kann. Diese Flächengrenze wird über die Tastatur 25 in das Steuerregister 24 eingegeben, das bei Erreichen der markierten Flächengrenze für das Warnsignal 28 den Auslösebefehl erteilt.

Besonders vorteilhaft arbeitet das mobile landwirtschaftliche Gerät beim Ausbringen von Saatgut. Hier ist die Zielgrösse nicht eine bestimmte Gewichtsmenge pro Flächeneinheit, sondern zur Erzielung einer optimalen Pflanzendichte eine bestimmte Körnerzahl pro Flächeneinheit. Bekanntermassen wird auch Saatgut nur deswegen in Gewichtseinheiten dosiert, weil die Auszählung der Körner in der vollständigen Arbeitsmenge auch in der verkürzten Zeit für eine Abdrehprobe zu arbeitsaufwendig wäre. Diese Gewichtsdosierung ist bei Saatgut wie Getreide, Grassamen, Raps u.a. körnigen Kultiviergut nicht kalibrierbar und deshalb ungenau. Körnergrösse und spezifisches Gewicht schwanken nach Saatsorte und Erntejahr.

Selbst in jeder einzelnen Probe gibt es eine Streuung unterschiedlich grosser und schwerer Körner. Das erfindungsgemässe Gerät mit reduzierter Kontrollmenge parallel zur Arbeitsmenge erlaubt eine rationelle Erfassung der Körnerzahl in einer kleinen repräsentativen Volumeneinheit, in der sie vor Beginn der Arbeit ausgezählt wird. Das kann -um unwirtschaftlichen Aufwand zu vermeiden- mit einfachen Hilfsmitteln, wie Zählrinnen mit profilierter Furche, geschehen, wo die Körner der auszuzählenden Volumeneinheit nur aufgereiht werden müssen, damit ihre Gesamtzahl schnell überblickt werden kann. Während der Arbeit genügt dann die Feststellung der ausgezählten Volumeneinheit, um jeweils auf die letztlich interessierende Körnerzahl umzurechnen.

Wenn der Querschnitt des Messbechers im kritischen Messbereich nahe seiner Oberkante entsprechend klein dimensioniert ist, bewegt sich der Oberflächenpegel der Kontrollmenge hinreichend genau. Beispielsweise steigt der Oberflächenpegel bei einer Drillmaschine mit 2,50 m Arbeitsbreite und 21 Säreihen mit 210 kg Weizen des spezifischen Gewichtes 0,75 g/cm$^3$ pro Hektar und einem Ausgangsquerschnitt des Meßbechers von 6,66 cm$^2$ um 0,5 cm pro Meter Fahrtstrecke im Feld. Eine Meßstrecke von 100 m erzeugt dann am Kontrolldosierrad 250 g Kontrollgut bzw. auf die aussagestärkere Körnerzahlmethode umgesetzt 400 Körner pro m$^2$ oder 48 Körner pro Meter Fahrtstrecke.

Es ist auch möglich, die bisherige Abdrehprobe und die erfindungsgemäße, arbeitsbegleitende Vorrichtung eines zu den Arbeitsdosierrädern parallelen Kontrolldosierrades mit Meßbehälter zu kombinieren. Die bekannte Abdrehprobe gibt einen Querschnitt über die gesamte Leistungsbreite in einem bestimmten Zeit- oder Arbeitsintervall; der parallele Meßbehälter einen Querschnitt über die gesamte Arbeitszeit auf einem exemplarischen Ausflußabschnitt. Wird nun vor Arbeitsbeginn die Abdrehprobe und anschliessend die arbeitsbegleitende Meßbehälterkontrolle durchgeführt, werden sowohl Unregelmäßigkeiten über die Arbeitsbreite wie über die Länge der Einsatzzeit erfaßt.

Die mit der EP-A-93986 erzielten Vorteile bestehen insbesondere darin, daß die Dosiermenge arbeitsbegleitend und quantitativ gemessen wird, daß die Messung nicht an einer experimentellen Abdrehprobe unter unrealistischen Bedingungen ohne Fahrterschütterungen, ohne Schlupf im Antrieb, u.dgl., sondern an der tatsächlichen Anzahl der Umdrehungen der Dosierwelle orientiert wird, daß die Dosierung bei kleinen, leicht zu handhabenden Kontrollmengen über kontrollierbare Weg- und Zeitintervalle mit hinreichender Genauigkeit arbeitet, daß die Anzahl der Umdrehungen der Dosierwelle permanent und in beliebigen Arbeitsabschnitten gemessen wird, daß Gewichtsmessungen einfach in Volumenmessungen umgesetzt werden können, daß der technische Aufwand äußerst gering ist, daß die Verwendung von im Vorratsbehälter versagenden Lichtschranken möglich ist. Bei pulverigen und gekörnten Kultiviergütern herrscht im Vorratsbehälter immer eine starke Staubentwicklung, so dass die Beobachtung des Absinkens der Kultiviergutoberfläche auf den Behälterboden, der immer verunreinigt ist, nicht möglich ist. Im Unterschied hierzu löst im Messbecher nach der EP-A-93986 das Ansteigen der Kultiviergutoberfläche ein Signal aus, wobei der obere Rand des Messbechers im Bereich der Lichtschranke leicht sauber gehalten werden kann. Weitere Vorteile bestehen darin, dass permanent die Ausbringung des Kultiviergutes kontrolliert werden kann, dass die Vorrichtung unempfindlich gegen Hanglagen ist, dass sie nicht vom Anwender kontrolliert werden muss und sich vor dem Überlaufen des Messbechers automatisch abschaltet, dass die Säarbeit nicht unterbrochen zu werden braucht, weil der Anwender während der Fahrt auf dem Traktor die Messergebnisse ablesen und die Entleerung des Messbechers vornehmen kann. Vor Beginn der Arbeit kann der Messbecher durch Wiegen oder Auszählen des Inhalts für das jeweilige Saatgut geeicht werden.

In der vorliegenden Erfindung wird nun von folgenden Überlegungen Gebrauch gemacht:

Wenn gilt: U = Anzahl der Umdrehungen der Dosierwelle bzw. der Dosierräder (Dosierarbeit)

s = zurückgelegte Fahrstrecke und

x = Übersetzungsverhältnis

c = eine Maschinenkonstante

dann gilt:

$U = c \cdot x \cdot s$

bzw.

FIG1/10

(Dosierleistung) $= c \cdot x$.

FIG2/10

(Fahrgeschwindigkeit).

Wenn die Fahrstrecke, innerhalb der ein Messbecher gefüllt wird, konstant bleiben soll, dann muss x abhängig von U sein. Wenn aber beispielsweise zwischen den einzelnen Einstellungsstufen der Dosiervorrichtung keine gleichen arithmetischen sondern gleiche prozentuale Abstände bestehen, gilt

$x = \log (u \cdot c)$

Nach der Erfindung muss also lediglich die zur Füllung des Messbechers mit einer vorgegebenen Füllmenge erforderliche Dosierarbiet, also beispielsweise die Anzahl der Umdrehungen der Dosierwelle, mit einer maschinenspezifischen Konstanten multipliziert werden, ohne dass während der Arbeit die zurückgelegte Wegstrecke oder Fläche gemessen und ohne dass die alte Dosiereinstellung festgehalten werden muss. Das Ergebnis des Dosierwellenumdrehungszählers kann direkt zur Einstellung der Arbeitsdosiereinrichtung verwendet werden.

Die Erfindung lässt sich natürlich auch bei anderen Sämaschinen als der oben beschriebenen anwenden. Beispielsweise könnte die Sämaschine auch mit einer Förderschnecke betrieben werden. Im Anspruch 1 ist die allgemeinste Form der Erfindung angegeben.

**Patentansprüche**

1. Verfahren zur Regelung der pro Flächeneinheit auf eine landwirtschaftliche Nutzfläche aus einem über die landwirtschaftliche Nutzfläche verfahrbaren Vorratsbehälter mit Hilfe einer Arbeitsdosiervorrichtung ausgebrachten Menge an Kultiviergut, wobei ein Teil des Kultiviergutes aus dem Vorratsbehälter mit Hilfe einer Kontrolldosiereinheit in einen mitgeführten Meßbecher gefüllt wird, wobei die Arbeitsdosiervorrichtung und die Kontrolldosiereinheit von einer gemeinsamen Dosierwelle angetrieben werden, die über eine einstellbare Übersetzungseinrichtung mit den Laufrädern des Vorratsbehälters verbunden ist, und das Verhältnis zwischen der Umdrehungsgeschwindigkeit der Dosierwelle und der Fahrgeschwindigkeit derart geändert wird, daß die Fahrstrecke, innerhalb der der Meßbecher mit der fest vorgegebenen Füllmenge gefüllt wird, gleich bleibt, dadurch gekennzeichnet, daß die Übersetzung der übersetzungseinrichtung in Abhängigkeit von der Anzahl der Umdrehüngen der Dosierwelle eingestellt wird, die erforderlich ist, um den Meßbecher zu füllen.

2. Verfahren nach Anspruch 1, dadurch gekennzeichnet, daß die fest vorgegebene Füllmenge des Meßbechers in Abhängigkeit von der pro Flächeneinheit auf die landwirtschaftliche Nutzfläche auszubringenden Menge an Kultiviergut und in Abhängigkeit des spezifischen Volumens des Kultiviergutes verändert wird.

## Claims

1. A method for the adjustment of the quantity of material for cultivation applied per unit area to agricultural land in use from a supply hopper displaceable over the agricultural land in use by means of an operating dosage device, a portion of the material for cultivation being filled from the supply hopper by means of a control dosage unit into a measuring beaker carried along, the operating dosage device and the control dosage unit being driven by a common dosage shaft which is connected with the track wheels of the supply hopper via an adjustable gearing device and the ratio between the speed of revolution of the dosage shaft and of the speed of travel being modified in such a way that the track travelled wherein the measuring beaker is filled by the fixed predetermined filler quantity remains constant,
characterised in that
the gearing of the gearing device is set according to the number of revolutions of the dosage shaft required to fill the measuring beaker.

2. A method according to Claim 1, characterised in that the fixed predetermined filler quantity for the measuring beaker is modified according to the quantity of material for cultivation to be applied per unit area to the agricultural land in use and according to the specific volume of the material for cultivation.

## Revendications

1. Procédé de réglage de la quantité de matière agricole repandue par unité de surface sur une terre exploitée à partir d'un récipient de réserve déplaçable sur la terre exploitée et à l'aide d'un dispositif de dosage, une partie de la matière agricole étant depuis le récipient de réserve chargée dans un godet de mesure entraîné à l'aide d'une unité de dosage de contrôle, le dispositif de dosage de travail et l'unité de dosage de contrôle étant entraînés par un arbre de dosage commun qui, par l'intermédiaire d'un dispositif de transmission ajustable, est relié aux roues de roulement du récipient de réserve, le rapport entre la vitesse de rotation de l'arbre de dosage et la vitesse de déplacement étant modifié de telle façon que la distance parcourue, à l'intérieur de laquelle le godet de mesure est chargé de la quantité de remplissage prédéterminée de manière fixe, reste identique, caractérisé en ce que le rapport du dispositif de transmission est ajusté en fonction du nombre des tours de l'arbre de dosage qui est nécessaire pour remplir le godet de mesure.

2. Procédé suivant la revendication 1, caractérisé en ce que la quantité de remplissage prédéterminée de manière fixe du godet de mesure est modifiée en fonction de la quantité de matière en agricole à répandre par unité de surface sur la terre exploitée et en fonction du volume spécifique de la matière agricole.

FIG.1

FIG.2

FIG.3